# FASCICULE DE BREVET EUROPEEN

(11) **EP 2 794 514 B1**
(45) Date de publication et mention de la délivrance du brevet: **14.12.2016**
(21) Numéro de dépôt: 12810296.9
(22) Date de dépôt: 21.12.2012
(51) Int. Cl.: C04B 35/80, C04B 35/622, C04B 35/626

(54) **PROCÉDÉ POUR RÉDUIRE LA RUGOSITÉ DE SURFACE DE FIBRES EN CARBURE DE SILICIUM DESTINÉES A ÊTRE UTILISÉES POUR LA RÉALISATION D'UN COMPOSITE A MATRICE CÉRAMIQUE**
VERFAHREN ZUR VERRINGERUNG DER RAUIGKEIT DER OBERFLÄCHE VON SILICIUMCARBIDFASERN ZUR HERSTELLUNG EINES KERAMIKMATRIXVERBUNDSTOFFS
METHOD FOR REDUCING THE SURFACE ROUGHNESS OF SILICON-CARBIDE FIBERS TO BE USED FOR PRODUCING A CERAMIC MATRIX COMPOSITE

(30) Priorité: 22.12.2011 FR 1162326
(43) Date de publication de la demande: 29.10.2014
(73) Titulaire: Commissariat à l'Énergie Atomique et aux Énergies Alternatives, 75015 Paris (FR)
(72) Inventeur: BUET, Emilien, F-33160 Saint Medard en Jalles (FR); SAUDER, Cédric, F-78730 Saint Arnoult en Yvelines (FR); POISSONNET, Sylvie, F-91430 Igny (FR); VIX-GUTERL, Cathie, F-68400 Riedisheim (FR)
(74) Mandataire: Ahner, Philippe
(86) Numéro de dépôt international: PCT/EP2012/076639
(87) Numéro de publication internationale: WO 2013/093003

(56) Documents cités:
- FR-A1- 2 640 258
- FR-A1- 2 939 789
- GRECK O ET AL: "SiC-based ceramic fibres : Evidence of a carbon network", ADVANCES IN SCIENCE AND TECHNOLOGY,, vol. 22, 1 janvier 1999 (1999-01-01), pages 13-20, XP009160756,
- GOGOTSI Y G ET AL: "FORMATION OF CARBON COATINGS ON SIC FIBERS BY SELECTIVE ETCHING IN HALOGENS AND SUPERCRITICAL WATER", CERAMIC ENGINEERING AND SCIENCE PROCEEDINGS, AMERICAN CERAMIC SOCIETY INC, US, vol. 19, no. 3, 20 janvier 1998 (1998-01-20), pages 87-94, XP001074290, ISSN: 0196-6219
- GOGOTSI Y G ET AL: "FORMATION OF CARBON FILMS ON CARBIDES UNDER HYDROTHERMAL CONDITIONS", NATURE: INTERNATIONAL WEEKLY JOURNAL OF SCIENCE, NATURE PUBLISHING GROUP, UNITED KINGDOM, vol. 367, no. 6464, 17 février 1994 (1994-02-17), pages 628-630, XP000605144, ISSN: 0028-0836, DOI: 10.1038/367628A0

## Description

### DOMAINE TECHNIQUE

La présente invention se rapporte à un procédé permettant de réduire la rugosité de surface d'une fibre de carbure de silicium (SiC) de 3^{ème} génération en vue de l'optimisation de la fabrication des composites à matrice céramique (matériaux CMC), et en particulier des composites SiC/SiC.

Le procédé selon l'invention a de nombreuses applications et peut en particulier être utilisé pour la réalisation de matériaux CMC destinés à des applications à hautes températures, comme par exemple la réalisation de gaines combustibles ou de tubes hexagonaux pour les réacteurs nucléaires, dans l'aéronautique (réalisation de tuyères, d'aubes de turbine, de volets et de pièces chaudes des réacteurs), pour la réalisation d'échangeurs thermiques, de turbines à gaz haute température, etc...

### ÉTAT DE LA TECHNIQUE ANTÉRIEURE

Dans le cadre de la présente invention, on s'intéresse aux matériaux composites à matrice céramique fabriqués à partir de fibres SiC. Plus particulièrement, on s'intéresse aux matériaux composites à matrice céramique fabriqués à partir de fibres SiC dites de 3^{ème} génération.

Les fibres SiC de 3^{ème} génération sont des fibres de haute pureté ; en effet, elles contiennent très peu d'oxygène et possèdent un très faible excès de carbone libre (seconde phase). Les fibres SiC de 3^{ème} génération sont parfois qualifiées de fibres « stoechiométriques ». Cependant, ce terme est trompeur car les fibres SiC de 3^{ème} génération ne sont en réalité jamais parfaitement stoechiométriques. En effet, tout le silicium est lié au carbone sous forme SiC, mais il existe toujours un excès de carbone non lié au silicium : il s'agit du carbone libre. La seconde phase mentionnée plus haut désigne le carbone non lié à un atome de silicium.

A titre d'exemple, le rapport, en pourcentage atomique, des atomes de carbone sur les atomes de silicium est de 1,07 pour les fibres Hi-Nicalon S et de 1,03 (en surface) et 1,19 (au coeur de la fibre) pour les fibres Tyranno SA3 (source : document **[1]**).

Les matériaux CMC fabriqués à partir de fibres SiC de 3^{ème} génération, et en particulier les composites SiC/SiC, sont particulièrement intéressants car ils présentent un intérêt significatif en termes de tenue mécanique à haute température, en particulier par rapport aux composites fabriqués à partir de fibres des précédentes générations (1^{ère} et 2^{ème} génération) (source : document **[2]**).

L'utilisation de ce type de renforts fibreux de 3^{ème} génération est même indispensable pour la fabrication de composites SiC/SiC utilisables dans le cadre d'applications nucléaires (source : document **[3]**).

Cependant, il se trouve qu'à l'heure actuelle, parmi les trois fibres SiC de 3^{ème} génération disponibles dans le commerce, seuls deux types de fibres sont compatibles en termes de composition avec des applications nucléaires. Il s'agit des fibres Hi-Nicalon S (fabriquées par Nippon carbon Co.) et Tyranno SA3 (fabriquées par UBE industry Ltd.).

Les caractéristiques de ces deux fibres sont rassemblées dans le tableau 1 ci-dessous (source : document **[1]**).

**TABLEAU 1**

| **DONNEES** | **Hi-Nicalon S** | **Tyranno SA3** |
|---|---|---|
| Densité (g.cm⁻¹) | 2,95 | 3,01 |
| Nombre de fibres par fil | 500 | 1600 ou 800 |
| Diamètre moyen (µm) | 13 | 7 ou 10 |
| Module des fibres (GPa) | 375 | 385 |
| Module des fils (GPa) | 319 | 312 |
| Contrainte à rupture des fils (MPa) | 2480 | 2410 |
| Déformation à rupture des fils (%) | 0,73 | 0,68 |
| Conductivité thermique à 25°C (W.m⁻¹.K⁻¹) | 18 | 65 |
| Taille des grains obtenue par : | | |
| Diffraction des Rayons X | 20 | 60-70 |
| Microscopie Electronique en transmission | 10-50 | 50-400 |
| Composition chimique C/Si (% atomique) | 1,07 | 1,03 (surface) |
| | | 1,19 (coeur) |

Comme on peut le constater, mis à part une différence de conductivité thermique et une taille de grains différentes, ces deux fibres possèdent des caractéristiques similaires.

La composition chimique de l'extrême surface est, elle aussi, similaire pour les deux fibres, à savoir que la proche surface est principalement constituée de carbone, comme le montre le tableau 2 ci-dessous (source : document **[4]**).

**TABLEAU 2**

| Type de fibre | C₁ₛ (% at.) | O₁ₛ (% at.) | Si₂ₚ (% at.) |
|---|---|---|---|
| Hi Nicalon S | 83,9 | 5,6 | 10,6 |
| Tyranno SA3 | 84,3 | 4,1 | 11,6 |

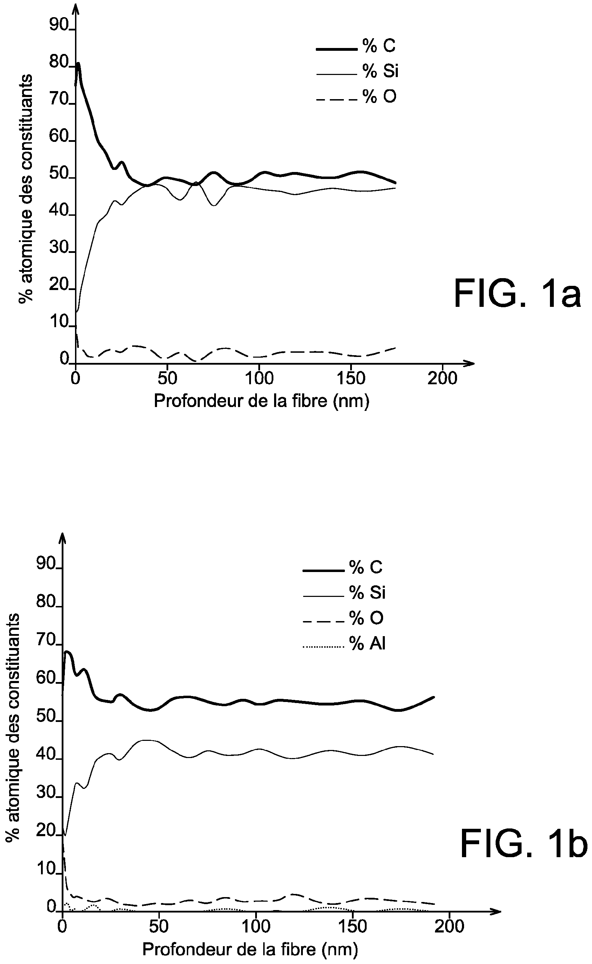

En étudiant l'évolution de la composition chimique en fonction de la profondeur d'une fibre Hi-Nicalon S (figure 1a) et d'une fibre Tyranno SA3 (figure 1b), on constate que la phase carbonée, majoritaire en extrême surface, est présente sur les vingt premiers nanomètres des fibres environ (de la surface vers le coeur). On rappelle qu'une extrême surface correspond aux dix premiers nanomètres d'une fibre (de la surface vers le coeur).

Or, il se trouve que, bien que ces deux fibres soient relativement similaires, les matériaux composites obtenus à partir de ces deux types de fibres ont des résistances mécaniques très différentes. En effet, alors que la fabrication de composites à partir de renforts Hi-Nicalon S permet d'obtenir des matériaux ayant un comportement mécanique optimal à forte ductilité, la fabrication de composites à renforts Tyranno SA3 conduit, quant à elle, à un matériau fragile à faible ductilité.

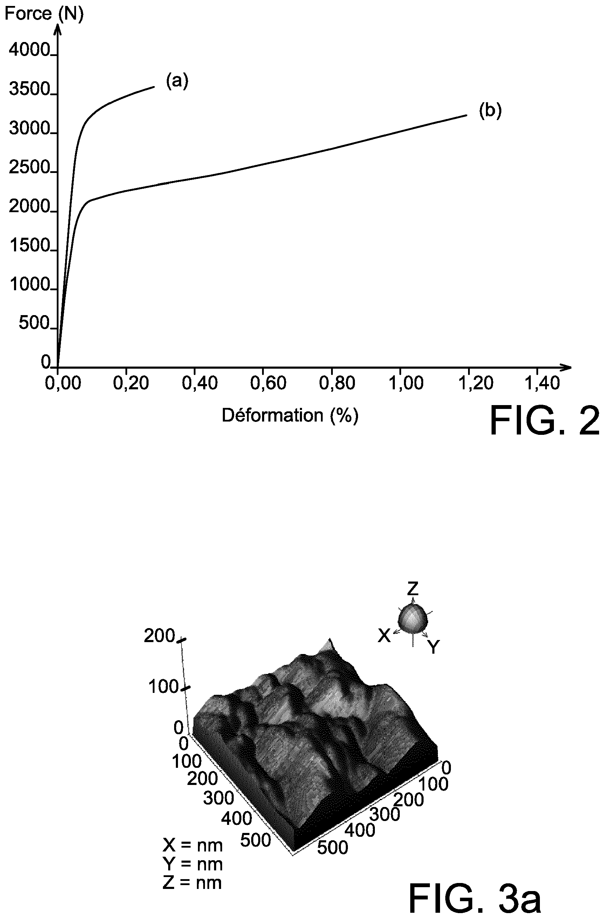

Par exemple, bien que des déformations supérieures à 0,5% soient classiquement obtenues pour des composites SiC/SiC à renforts Hi-Nicalon S, les composites SiC/SiC renforcés par des fibres Tyranno SA3 ne présentent jamais de déformations à rupture supérieures à 0,3%. Ceci est illustré par la figure 2 qui présente le comportement mécanique en traction de deux tubes en matériau SiC/SiC dont le renfort résulte du tressage bidimensionnel à 60° de fibres Tyranno SA3, pour l'un (courbe a), et de fibres Hi-Nicalon S pour l'autre (courbe b).

Ceci est pénalisant car la fibre Tyranno SA3 présente des avantages intéressants par rapport à la fibre Hi-Nicalon S.

En effet, la fibre Tyranno SA3 a un coût de fabrication plus faible (environ 7500 €/kg) que celui de la fibre Hi-Nicalon S (environ 11000 €/kg).

De plus, la fibre Tyranno SA3 présente une meilleure conductivité thermique que la fibre Hi-Nicalon S (65 contre 18 W/m/K) et cette différence de conductivité thermique peut être prépondérante pour une application de transfert de chaleur telle que le gainage de combustible nucléaire par exemple.

Les Inventeurs ont donc cherché à identifier l'origine de cette différence de résistance mécanique entre les matériaux CMC à fibres Tyranno SA3 et les matériaux CMC à fibres Hi-Nicalon S.

C'est ainsi qu'au cours de leurs travaux (document **[4]**), les Inventeurs ont constaté que les fibres Tyranno SA3 présentent une rugosité de surface qui est trois fois plus importante que celle des fibres Hi-Nicalon S (12 nm contre 4 nm) ; d'autre part, ils ont également constaté que la surface des fibres Tyranno SA3 est principalement composée de carbone et, dans une moindre mesure, de SiC, avec une fraction négligeable de SiO₂, alors que la fraction de SiO₂ est plus importante à la surface des fibres Hi-Nicalon S, cette différence de chimie de surface étant liée aux modes de réalisations différents utilisés au cours de la fabrication de ces deux types de fibres.

Les Inventeurs en ont déduit que la résistance de la liaison d'interface entre les fibres et la matrice dans un matériau SiC/SiC est contrôlée par la rugosité de surface et par la chimie de surface des fibres SiC. Au final, ils sont arrivés à la conclusion selon laquelle l'amélioration de la résistance mécanique d'un matériau composite renforcé par des fibres Tyranno SA3 doit passer par la diminution de la rugosité de surface et/ou par la modification de la chimie de surface des fibres.

Cependant, si l'on modifie la chimie de surface des fibres, on prend le risque de détériorer les performances de ces fibres ; quant à la modification de la rugosité de surface des fibres, bien qu'on sache comment augmenter la rugosité de surface d'une fibre de SiC, par exemple en procédant à une attaque chimique du type Murakami (mélange de 40 g d'eau, 6 g de soude et 8 g de ferricyanure de potassium) (source : document **[5]**), on ne sait pas comment procéder pour diminuer la rugosité de surface d'une fibre de SiC.

### EXPOSÉ DE L'INVENTION

La présente invention permet justement de diminuer la rugosité de surface des fibres de SiC de 3^{ème} génération, de préférence les fibres Tyranno SA3.

A cette fin, l'invention propose de modifier la surface de fibres céramique en vue de l'optimisation de la fabrication de composites à matrice céramique renforcée par des fibres de SiC de 3^{ème} génération en appliquant auxdites fibres, avant la formation du matériau composite, un traitement qui permet de réduire la rugosité de surface des fibres. En outre, l'avantage de cette technique est qu'elle permet de réduire la rugosité de surface des fibres sans modifier les propriétés chimiques de l'extrême surface desdites fibres (c'est-à-dire en conservant une surface carbonée en extrême surface des fibres). En utilisant le procédé selon l'invention, on peut par exemple réduire la rugosité de surface d'une fibre Tyranno SA3 à un niveau similaire à celui d'une fibre Hi-Nicalon S.

L'invention consiste donc en une attaque chimique de la surface des fibres, de préférence d'une partie de la phase carbonée se trouvant en extrême surface des fibres comportant du carbure de silicium, à l'aide d'un agent oxydant du carbone. En effet, dans le cadre de leurs travaux, les Inventeurs ont constaté que, de manière surprenante, en soumettant des fibres de SiC de 3^{ème} génération à un traitement chimique par mise en contact de ces fibres avec une solution comprenant un agent oxydant, on parvenait à diminuer la rugosité de surface de ces fibres.

L'invention a donc pour objet un procédé pour réduire la rugosité de surface de fibres de carbure de silicium, lesdites fibres étant des fibres de carbure de silicium de 3^{ème} génération et étant destinées à former une préforme fibreuse d'un composite à matrice céramique, lequel procédé comprend un traitement d'attaque chimique de la surface des fibres par mise en contact desdites fibres avec une solution comprenant un agent oxydant.

En fait, on constate qu'avec ce procédé, les fibres obtenues à l'issue de l'étape de traitement sont moins rugueuses en surface que les fibres non traitées.

Le principe de l'invention repose donc sur l'utilisation d'une attaque chimique de la couche de carbone de l'extrême surface de fibres de carbure de silicium de 3^{ème} génération destinées à entrer dans la constitution d'un matériau composite à matrice céramique, afin de diminuer la rugosité de surface des fibres en vue d'optimiser la fabrication des composites à matrice céramique.

A titre d'information, un traitement de surface d'une fibre SiC est décrit dans le document **[6]**, ce traitement de surface s'adresse cependant à des fibres SiC de 1^{ère} génération et non à des fibres SiC de 3^{ème} génération.

A l'heure actuelle, les fibres de SiC de 3^{ème} génération disponibles dans le commerce comportent une teneur en carbone plus importante en surface qu'au coeur des fibres, comme c'est par exemple le cas des fibres Tyranno SA3 et Hi-Nicalon S. De manière schématique, on peut considérer que les fibres présentent un coeur et une zone périphérique, la teneur en carbone étant plus importante dans la zone périphérique que dans le coeur.

De préférence, les fibres avant et après le traitement d'attaque chimique comportent une teneur en carbone qui est plus importante en périphérie des fibres qu'au coeur des fibres. Pour ce faire, l'attaque chimique est, de préférence, stoppée avant qu'elle n'atteigne le coeur des fibres afin de ne pas retirer l'intégralité de la couche de carbone présente en extrême surface des fibres. En effet, cette couche de carbone représente un atout pour l'adhésion chimique entre la fibre et l'interphase carbonée lors de la formation d'un matériau CMC (on rappelle qu'un matériau CMC est formé d'une préforme en fibres, d'une matrice en céramique et d'une interphase, cette dernière étant située entre les fibres et la matrice). Ainsi, seule une partie de l'épaisseur de la zone périphérique des fibres, riche en carbone, est attaquée et au final, on réduit la rugosité de surface des fibres, tout en conservant une phase carbonée majoritaire en extrême surface des fibres.

En résumé, comme le carbone est en excès en surface des fibres de SiC de 3^{ème} génération (voir par exemple les figures 1a et 1b) lorsqu'on procède à une attaque chimique des fibres, on s'attaque à la zone périphérique de manière contrôlée et on peut réduire la rugosité de surface des fibres en conservant une phase carbonée majoritaire en surface, sans attaquer le carbure de silicium sous-jacent présent dans le coeur des fibres.

Au final, grâce au procédé selon l'invention, on peut réduire la rugosité de surface de fibres en céramique possédant une proche surface carbonée, comme par exemple les fibres Tyranno SA-3 en vue de l'optimisation de la fabrication des composites à matrice céramique.

En l'état actuel de leurs travaux, les Inventeurs supposent que l'attaque chimique du carbone présent en extrême surface des fibres de SiC de 3^{ème} génération avec une solution comprenant un agent oxydant provoquerait directement la formation de dioxyde de carbone. Plus particulièrement, la mise en contact de l'agent chimique oxydant avec le carbone des fibres formerait une espèce chimique gazeuse carbonée : dioxyde de carbone, monoxyde de carbone ou autre.

De préférence, le traitement oxydant des fibres est suivi d'une ou plusieurs opérations de lavage des fibres, puis d'une ou plusieurs opérations de séchages desdites fibres. Ces opérations peuvent être réalisées selon les procédures classiquement employées en matière de lavage et de séchage de fibres. Par exemple, les fibres traitées chimiquement peuvent être rincées à l'eau distillée, puis à l'acétone pendant 15 minutes sous ultrasons, pour enfin être séchées.

Selon un mode de réalisation préféré de l'invention, la mise en contact des fibres avec la solution est obtenue par immersion des fibres dans la solution. Lorsqu'elles sont mises en contact avec la solution, les fibres peuvent être brutes ou mises en forme (fils ou préforme fibreuse).

Avantageusement, l'agent oxydant qui est utilisé est choisi parmi les carbonates d'un métal alcalin tels que, par exemple, de sodium ou de potassium, les carbonates d'un alcalino-terreux tels que, par exemple, de calcium ou de magnésium, les peroxydes, par exemple d'hydrogène, les hypochlorites d'un métal alcalin, par exemple de sodium ou de potassium, les hypochlorites d'un métal alcalino-terreux, par exemple de calcium ou de magnésium, les acides oxydants, par exemple l'acide nitrique HNO₃, l'acide chlorique HClO₃, l'acide chromique H₂CrO₄, l'acide sulfurique H₂SO₄, et les permanganates d'un métal alcalin, par exemple de sodium ou de potassium, ou d'un métal alcalino-terreux.

En fait, le choix de l'agent oxydant se fait parmi les agents oxydants aptes à attaquer préférentiellement le carbone.

Une fois l'agent oxydant choisi, la concentration de cet agent oxydant peut être adaptée en fonction des facteurs temps/volume/masse de fibres à traiter. En tout état de cause, il entre dans les compétences normales d'un homme du métier de savoir déterminer, en fonction du choix de l'agent oxydant, comment adapter les facteurs temps/volume/masse de fibres à traiter pour obtenir la rugosité de surface souhaitée.

Selon un mode de réalisation préféré, la solution oxydante est choisie parmi une solution de peroxyde d'hydrogène (H₂O₂) à 15% en volume, une solution de carbonate de sodium (Na₂CO₃) de concentration 1M et une solution d'acide nitrique (HNO₃) à 65% en volume.

Parmi tous les traitements proposés ci-dessus, un traitement à base de Na₂CO₃ est le plus intéressant d'un point de vue industriel, car il ne présente aucune toxicité (il s'agit même d'un additif alimentaire).

L'utilisation d'une solution diluée d'H₂O₂ est également intéressante, car elle ne présente que de très faibles contraintes de sécurité liées à son utilisation industrielle. De plus, elle présente aussi un faible coût.

De préférence, l'étape de traitement d'attaque chimique comprend en outre l'application d'ultrasons à la solution comprenant un agent oxydant au cours de la mise en contact des fibres avec la solution. L'application d'ultrasons va permettre une meilleure diffusion de l'agent oxydant en surface des fibres et ainsi favoriser l'homogénéisation de l'attaque chimique par l'oxydation de la surface des fibres.

De préférence, le procédé comprend en outre un désensimage des fibres de carbure de silicium avant le traitement d'attaque chimique. Il est en effet préférable, si les fibres possèdent une couche d'ensimage, de la retirer avant de plonger les fibres dans la solution chimique. Pour rappel, l'ensimage est une couche de polymère qui est appliquée par le fabricant sur les fibres lors de la fabrication des fibres, afin de faciliter les opérations de mise en forme des fibres (tissage, tressage...). Or, la présence de ce polymère peut réduire voire annuler l'efficacité du traitement chimique, ce qui justifie son élimination préalable.

Les techniques de désensimage des fibres sont connues de l'homme du métier. Pour réaliser ce désensimage, nous pouvons par exemple effectuer un traitement thermique à environ 900°C sous atmosphère inerte pendant une heure, afin de bruler le polymère d'ensimage, mais tout autre traitement connu de l'homme du métier ayant pour effet d'éliminer le polymère d'ensimage peut être appliqué (traitement chimique, traitement thermique flash sous air, etc...).

Toute fibre SiC possédant une couche carbonée en surface peut subir une réduction de sa rugosité de surface à l'aide du procédé selon l'invention.

Avantageusement, les fibres de carbure de silicium sont des fibres obtenues par décomposition thermique et frittage d'un précurseur Si-Al-C-O. De préférence, ces fibres sont des fibres SiC de 3^{ème} génération disponibles commercialement sous la référence Tyranno SA3.

Les fibres, une fois traitées, peuvent soit être immédiatement utilisées dans la fabrication de pièces en matériaux composites, soit être stockées en vue d'une utilisation ultérieure, soit encore être conditionnées en vue de leur livraison à des fabricants de pièces en matériaux composites. En effet, le procédé selon l'invention peut aussi bien être mis en oeuvre par les fabricants de fibres de carbure de silicium que par leurs utilisateurs.

L'invention concerne également un procédé de fabrication d'une pièce en matériau composite comprenant une préforme fibreuse à base de fibres de carbure de silicium et une matrice céramique, lequel procédé comprend la réalisation de la préforme fibreuse à partir de fibres de carbure de silicium de 3^{ème} génération et la formation de la matrice céramique autour desdites fibres, et est caractérisé en ce qu'il comprend en outre, avant la formation de la matrice céramique, la mise en oeuvre d'un procédé pour réduire la rugosité de surface des fibres de carbure de silicium tel que décrit ci-dessus.

L'invention sera mieux comprise et d'autres avantages et particularités apparaîtront à la lecture de la description qui va suivre, donnée à titre d'exemple non limitatif, accompagnée des figures annexées.

### BRÈVE DESCRIPTION DES FIGURES

Les figures 1a et 1b, déjà évoquées ci-dessus, représentent respectivement l'évolution de la composition chimique en fonction de la profondeur d'une fibre Hi-Nicalon S (figure 1a) et d'une fibre Tyranno SA3 (figure 1b).
La figure 2, déjà évoquée ci-dessus, représente le comportement mécanique en traction d'un composite du type tube tressé 2D à 60° à renfort Tyranno SA3, d'une part (courbe a), et à renforts Hi-Nicalon S, d'autre part (courbe b).

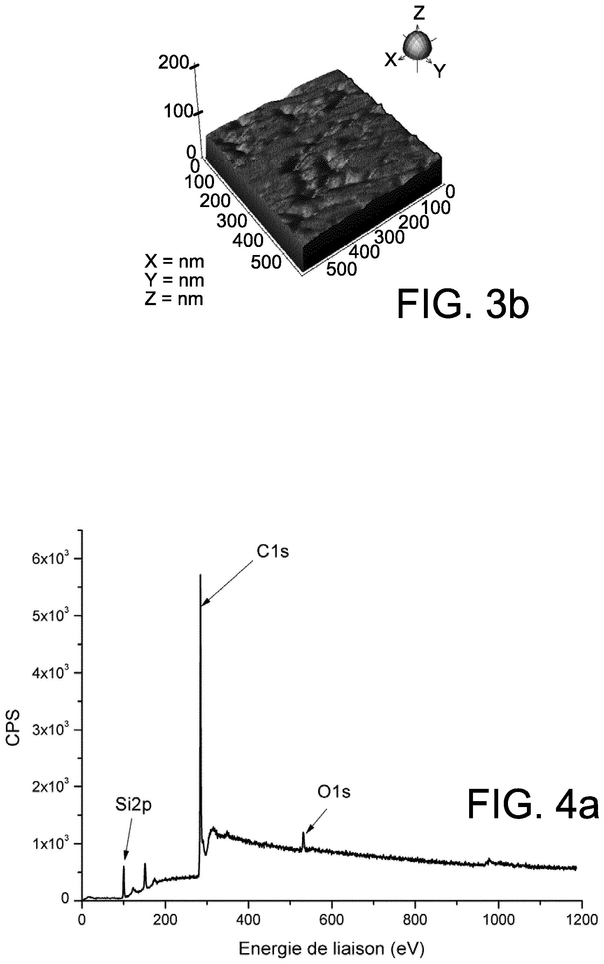

Les figures 3a et 3b représentent respectivement une image AFM de la surface d'une fibre Tyranno SA3 avant (figure 3a) et après (figure 3b) qu'elle ait subi un traitement Na₂CO₃ (C=1M) pendant 600 minutes et pour un rapport masse/volume de 50 sous ultrasons selon un mode de réalisation particulier du procédé selon l'invention.

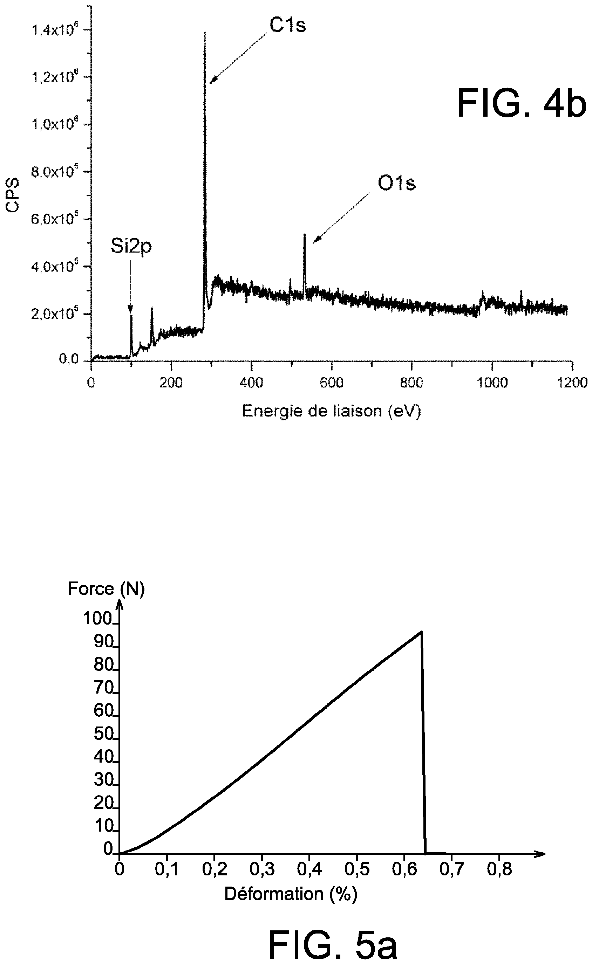

Les figures 4a et 4b sont des graphes obtenus par Spectroscopie de Photoélectrons induits par rayons X (XPS), qui montrent la composition chimique de l'extrême surface de la fibre Tyranno SA3 avant (figure 4a) et après (figure 4b) qu'elle ait subi un traitement Na₂CO₃ (C=1M) pendant 600 minutes et pour un rapport masse/volume de 50 sous ultrasons selon un mode de réalisation particulier du procédé selon l'invention.

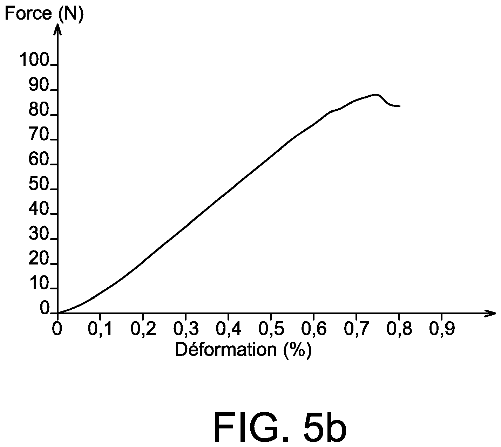

Les figures 5a et 5b représentent le comportement mécanique en traction de la fibre Tyranno SA3 avant (figure 5a) et après (figure 5b) qu'elle ait subi un traitement Na₂CO₃ (C=1M) pendant 600 minutes et pour un rapport masse/volume de 50 sous ultrasons selon un mode de réalisation particulier du procédé selon l'invention.

### EXPOSÉ DÉTAILLÉ DE MODES DE RÉALISATION PARTICULIERS

Dans les exemples ci-dessous, nous avons choisi de travailler avec des fibres Tyranno SA3 ayant un diamètre moyen de 10 µm et nous les avons traitées par immersion dans une solution de carbonate de sodium (Na₂CO₃) de concentration 1M, une solution de peroxyde d'hydrogène (H₂O₂) à 15% en volume et une solution d'acide nitrique à 65% en volume.

Dans chacun des exemples, chaque rugosité de surface a été déterminée par Microscopie à Force Atomique (AFM) sur quatre fibres prises de manière aléatoire dans un lot de fibres traitées.

Sur chacune de ces quatre fibres, 25 images de 600 nm par 600 nm ont été réalisées afin de limiter l'incertitude de la mesure.

Afin de quantifier la rugosité de surface pour chaque fibre traitée, nous avons utilisé la moyenne des écarts quadratiques des hauteurs mesurées par rapport au plan moyen sur la surface considérée (R_{RMS}). Le R_{RMS} est directement calculé par le logiciel pilotant l'AFM. Ainsi, les valeurs de rugosité qui sont données ici correspondent aux valeurs du R_{RMS}.

### Exemple 1

Dans cet exemple de réalisation, on traite les fibres SiC Tyranno SA3 en utilisant une solution oxydante à base de carbonate de sodium anhydre (Na₂CO₃) concentré à 1 M.

Une fois que la solution oxydante a été choisie, la concentration de cette solution oxydante peut être adaptée en fonction des facteurs temps/volume/masse de fibres à traiter. Dans cet exemple, les facteurs de concentration et de volume de la solution oxydante au Na₂CO₃ ont été fixés respectivement à 1 M et à 4 ml.

Les résultats d'un traitement de type Na₂CO₃ (C=1M) pendant une heure sur des fibres Tyranno SA3 ayant un diamètre moyen de 10 µm sont présentés dans le tableau 4 ci-après. Dans ce tableau, on peut voir l'évolution de la rugosité de surface en fonction de la masse de fibres Tyranno SA3 traitées à l'aide d'un traitement Na₂CO₃ (C=1M) pendant 1h.

**TABLEAU 4**

| | | | |
|---|---|---|---|
| Masse de fibres (mg) | 2000 | 20 | 2 |
| R (mg/ml) | 500 | 5 | 0,5 |
| Rugosité de surface (nm) | 9,7 | 6,6 | 5,9 |

Pour rappel, la rugosité initiale d'une fibre Tyranno SA3 de diamètre moyen 10 µm est de 12 nm.

Le traitement Na₂CO₃ (C=1M) sur 2 mg de fibres Tyranno SA3 permet d'obtenir une rugosité de 5,9 nm, alors qu'on obtient une rugosité de 9,7 nm sur 2000 mg de fibres.

Ces résultats montrent que la diminution de la quantité de fibres dans un même volume de solution oxydante entraîne une diminution de la rugosité de surface des fibres.

Le rapport masse de fibres/volume de solution oxydante (noté R) est donc un paramètre discriminant à la bonne efficacité du traitement.

On constate ainsi que pour un traitement de type Na₂CO₃ (C=1M) pendant une heure sur des fibres Tyranno SA3, l'efficacité du traitement est optimale pour un rapport masse/volume de 0,5 mg/ml.

Afin de vérifier que ce rapport masse/volume est un facteur discriminant quelle que soit la quantité de fibres traitées, nous avons également réalisé un essai pour une masse de fibre 100 fois plus élevée en adaptant le volume de solution oxydante afin de conserver ce rapport constant tout en conservant une concentration (1M) et une durée de traitement constante (1h).

Les résultats de l'évolution de la rugosité de surface en fonction du rapport masse de fibre Tyranno SA3/volume de solution oxydante pour un traitement Na₂CO₃ (C=1M) pendant 1h sont rassemblés dans le tableau 5 ci-dessous.

**TABLEAU 5**

| | | |
|---|---|---|
| Masse de fibres (mg) | 2 | 200 |
| Volume de solution (ml) | 4 | 400 |
| R (mg/ml) | 0,5 | 0,5 |
| Rugosité de surface (nm) | 5,9 | 5,9 |

Les résultats du tableau 5 montrent que la masse de fibres peut être adaptée en fonction du volume de la solution oxydante et inversement.

Le rapport R (masse de fibre/volume de solution oxydante) est donc discriminant à temps de traitement constant.

Afin de vérifier quelle est l'influence de la température du traitement sur la rugosité de surface des fibres Tyranno SA3, nous avons menée une expérience à température ambiante et à la température d'ébullition de la solution Na₂CO₃ (1M) pour un rapport masse/volume = 0,5.

L'évolution de la rugosité de surface en fonction de la température d'un traitement Na₂CO₃ (C=1M) pendant 1h est notée dans le tableau 6 ci-dessous.

**TABLEAU 6**

| | | |
|---|---|---|
| Température de traitement sur 2 mg de fibres (°C) | 25 | 100 |
| Rugosité de surface (nm) | 5,9 | 5,8 |

On constate ainsi que la température du traitement n'a pas d'influence sur la rugosité de surface des fibres Tyranno SA3. La température n'est donc pas un facteur discriminant pour cette solution.

La rugosité de surface des fibres Tyranno SA3 peut être optimisée en plaçant le système (solution et fibres) sous ultrasons.

Les résultats de l'évolution de la rugosité de surface avec ou sans application d'ultra-sons pendant 60 min sur 20 mg de fibres pour un traitement Na₂CO₃ (C=1M) sont rassemblés dans le tableau 7 ci-dessous.

**TABLEAU 7**

| | Traitement sans Ultra-son | Traitement avec Ultra-son |
|---|---|---|
| Rugosité de surface (nm) | 6,6 | 6,3 |

Le tableau 7 montre ainsi que le traitement pour un rapport masse/volume égal à 5 pendant 1h sous ultrasons permet de réduire encore la rugosité de surface. Les ultrasons permettent également d'obtenir une meilleure homogénéité du traitement chimique sur la rugosité de surface des fibres Tyranno SA3.

L'effet des ultrasons peut être plus ou moins visible selon le type de traitement utilisé. Cet effet est en effet beaucoup plus visible sur les deux autres types de traitements oxydants testés, que nous aborderons plus tard.

Le traitement peut être encore optimisé en ajoutant cette fois-ci le facteur temps couplé aux ultrasons.

Les résultats de l'évolution de la rugosité de surface en fonction du temps de traitement Na₂CO₃ (C=1M) avec application d'ultrasons sont rassemblés dans le tableau 8 ci-dessous.

**TABLEAU 8**

| | | |
|---|---|---|
| Temps de traitement sur 20 mg de fibres (min) | 60 | 600 |
| Rugosité de surface (nm) | 6,3 | 5,4 |

Le tableau 8 montre que la rugosité de surface des fibres Tyranno SA3 peut être diminuée si le temps de traitement des fibres dans une solution oxydante de Na₂CO₃ (C=1M) est multiplié par 10 (600 min contre 60 min) pour un rapport masse/volume égal à 5 sous ultrasons.

En conclusion, les paramètres suivants - masse de fibres à traiter, choix de la solution oxydante, volume et concentration de la solution oxydante, temps de traitement - peuvent être optimisés pour diminuer la rugosité de surface d'une fibre Tyranno SA3.

Ainsi, la gamme d'efficacité d'un traitement Na₂CO₃ (C=1M) pendant une durée de traitement d'une heure est valable pour un rapport R ≤ 500, mais ce traitement sera aussi efficace si le temps de traitement est multiplié par 10 pour un rapport R ≤ 5000.

Nous avons réalisé un traitement Na₂CO₃ (C=1M) avec un rapport R égal à 50 pendant 600 min sous ultra-sons sur des fibres Tyranno SA3. Les figures 3a et 3b sont des images AFM d'une surface d'une fibre Tyranno SA3 avant (figure 3a) et après (figure 3b) un tel traitement Na₂CO₃ (C=1M). On constate qu'avec un tel traitement, on obtient une rugosité optimale de 4,3 nm.

Nous avons effectué une comparaison de la composition chimique de l'extrême surface par XPS d'une telle fibre avant (figure 4a) et après (figure 4b) ce traitement Na₂CO₃ (C=1M).

Nous avons également effectué une comparaison de la composition chimique de l'extrême surface de fibres Tyranno SA3 avant traitement et après traitement Na₂CO₃ (C=1M). Les résultats sont rassemblés dans le tableau 9 ci-dessous.

**TABLEAU 9**

| | | | |
|---|---|---|---|
| Eléments chimiques présents en surface (% atomique) | C(1s) | O(1s) | Si(2p) |
| Fibre Tyranno SA3 non traitée | 84,3 | 4,1 | 11,6 |
| Fibre Tyranno SA3 traitée | 77,1 | 7,8 | 15,01 |

Pour finir, nous avons effectué une comparaison des comportements mécaniques des fibres Tyranno SA3 avant traitement (figure 5a) et après traitement Na₂CO₃ (C=1M) (figure 5b).

En étudiant ces résultats, on constate qu'en réalisant un traitement Na₂CO₃ (C=1M) avec R = 50 pendant 600 min sous ultra-sons, on obtient une rugosité optimale de 4,3 nm (figure 3b) sans modifier la chimie de surface (tableau 9 et figure 4b) et sans détériorer les propriétés mécaniques des fibres (figure 5b).

La procédure explicitée ci-dessus pour définir les conditions optimales dans le cas d'un traitement chimique à l'aide d'une solution oxydante de Na₂CO₃ (C = 1M) peut être adaptée à d'autres traitements chimiques avec des solutions oxydantes telles que le peroxyde d'hydrogène, l'acide nitrique, l'acide chromique (trioxyde de chrome), l'hypochlorite de calcium, le permanganate de sodium ou de potassium, le peroxyde de carbamide, etc...

### Exemple 2

Sur le même principe que dans l'exemple 1 ci-dessus, on fait subir un traitement H₂O₂ 15% pendant 60 min à des fibres Tyranno SA3.

On constate ainsi que la gamme d'efficacité d'un traitement H₂O₂ 15% pendant 60 min est valable pour un rapport R ≤ 5000.

Ce traitement est aussi efficace si le temps de traitement est multiplié par 10 pour un rapport R ≤ 50000.

L'efficacité optimale de ce traitement est obtenue pour R=5 pendant 600 minutes sous ultrasons. La rugosité alors obtenue est de 3 nm.

### Exemple 3

Sur le même principe que dans l'exemple 1, on fait subir un traitement HNO₃ (65%) pendant 180 min à des fibres Tyranno SA3.

On constate que ce traitement HNO₃ (65%) est efficace, quant à lui, pour tout R ≤ 500 pendant 180 min.

Ce rapport peut être multiplié par 10, lorsque le temps de traitement est lui aussi multiplié par 10.

Le traitement optimal en utilisant une solution de HNO₃ (65%) est valable pour une durée de 1800 min et permet d'obtenir une rugosité de 5,3 nm pour un rapport R = 50.

En conclusion, on constate que le procédé selon l'invention permet de réduire la rugosité de surface de la fibre Tyranno SA3 à un niveau similaire à celle de la fibre Hi-Nicalon S sans modifier les propriétés chimiques de l'extrême surface de cette fibre (c'est-à-dire conserver une surface carbonée). Ainsi, le procédé selon l'invention permet de diminuer la rugosité de surface des fibres de carbure de silicium de 3^{ème} génération sans modifier la chimie de l'extrême surface ni même les propriétés mécaniques de ces fibres.

### BIBLIOGRAPHIE

[1] C. Sauder et al. Influence of interface characteristics on the mechanical properties of Hi-Nicalon and SA3 fiber reinforced SiC/SiC minicomposites, International Journal of Applied Ceramic Technology (2010), 7(3), pages 291-303
[2] S. M. Dong et al. Characterization of nearly stoichiometric SiC ceramic fibres, Journal of Materials Science (2001), 36(10), pages 2371-2381
[3] C. Sauder et al. Tensile creep behavior of SiC-based fibers with a low oxygen content, Journal of the American Ceramic Society (2007), 90(4), pages 1146-1156
[4] E. Buet et al. Influence of chemical and physical properties of the last génération of silicon carbide fibres on the mechanical behaviour of SiC/SiC composite, Journal of the European Ceramic Society (2012), 32(3), pages 547-557 (disponible sur internet en octobre 2011)
[5] C. Sauder et al. Innovative SiCf/SiC composites materials for fast reactor application, ANS 2010, San Diego, 17 juin 2010
[6] FR 2 640 258 A1

## Revendications

1. Procédé pour réduire la rugosité de surface de fibres de carbure de silicium, les fibres étant des fibres de 3^{ème} génération et étant destinées à former une préforme fibreuse d'un composite à matrice céramique, lequel procédé comprend un traitement d'attaque chimique de la surface des fibres par mise en contact desdites fibres avec une solution comprenant un agent oxydant.

2. Procédé selon la revendication 1, dans lequel les fibres de carbure de silicium avant et après le traitement d'attaque chimique comportent une teneur en carbone qui est plus importante en périphérie des fibres qu'au coeur des fibres.

3. Procédé selon la revendication 1 ou la revendication 2, dans lequel la mise en contact des fibres de carbure de silicium avec la solution est obtenue par immersion des fibres dans la solution.

4. Procédé selon l'une quelconque des revendications 1 à 3, dans lequel l'agent oxydant est choisi parmi les carbonates d'un métal alcalin ou alcalino-terreux, les peroxydes, les hypochlorites d'un métal alcalin ou alcalino-terreux, les acides oxydants et les permanganates d'un métal alcalin ou alcalino-terreux.

5. Procédé selon la revendication 4, dans lequel l'agent oxydant est choisi parmi l'acide nitrique, l'acide chlorique, l'acide chromique, l'acide sulfurique, l'hypochlorite de calcium, l'hypochlorite de magnésium, l'hypochlorite de sodium, l'hypochlorite de potassium, le permanganate de sodium, le permanganate de potassium, le peroxyde de carbamide, le peroxyde d'hydrogène, le carbonate de potassium, le carbonate de sodium, le carbonate de calcium et le carbonate de magnésium.

6. Procédé selon la revendication 5, dans lequel la solution oxydante est choisie parmi une solution de peroxyde d'hydrogène à 15% en volume, une solution de carbonate de sodium de concentration 1 M et une solution d'acide nitrique à 65% en volume.

7. Procédé selon l'une quelconque des revendications 1 à 6, dans lequel le traitement d'attaque chimique comprend en outre l'application d'ultrasons à la solution comprenant un agent oxydant au cours de la mise en contact des fibres avec la solution.

8. Procédé selon l'une quelconque des revendications 1 à 7, comprenant en outre un désensimage des fibres de carbure de silicium avant le traitement d'attaque chimique.

9. Procédé selon l'une quelconque des revendications 1 à 8, dans lequel les fibres de carbure de silicium sont des fibres obtenues par décomposition thermique et frittage d'un précurseur Si-Al-C-O.

10. Procédé de fabrication d'une pièce en matériau composite comprenant une préforme fibreuse à base de fibres de carbure de silicium et une matrice céramique, lequel procédé comprend la réalisation de la préforme fibreuse à partir de fibres de carbure de silicium de 3^{ème} génération et la formation de la matrice céramique autour desdites fibres, et est **caractérisé en ce qu'**il comprend en outre la mise en oeuvre d'un procédé selon l'une quelconque des revendications 1 à 9 avant la formation de la matrice céramique.

## Patentansprüche

1. Verfahren zur Verringerung der Rauhigkeit der Oberfläche von Siliziumkarbidfasern, wobei die Fasern Fasern der 3. Generation sind und dazu ausgelegt sind, eine Faservorform eines Keramikmatrixverbundstoffs zu bilden, wobei das Verfahren eine chemische Ätzbehandlung der Oberfläche der Fasern durch Inkontaktbringen der Fasern mit einer Lösung umfasst, die ein Oxidationsmittel umfasst.

2. Verfahren nach Anspruch 1, bei dem die Siliziumkarbidfasern vor und nach der chemischen Ätzbehandlung einen Kohlenstoffgehalt haben, der am Rand der Fasern größer als im Kern der Fasern ist.

3. Verfahren nach Anspruch 1 oder Anspruch 2, bei dem das Inkontaktbringen der Siliziumkarbidfasern mit der Lösung durch Eintauchen der Fasern in die Lösung erzielt wird.

4. Verfahren nach einem der Ansprüche 1 bis 3, bei dem das Oxidationsmittel ausgewählt ist aus den Karbonaten eines Alkali- oder Erdalkalimetalls, den Peroxiden, den Hypochloriten eines Alkali- oder Erdalkalimetalls, den oxidierenden Säuren und den Permanganaten eines Alkali- oder Erdalkalimetalls.

5. Verfahren nach Anspruch 4, bei dem das Oxidationsmittel ausgewählt ist aus Salpetersäure, Chlorsäure, Chromsäure, Schwefelsäure, Kalziumhypochlorit, Magnesiumhypochlorit, Natriumhypochlorit, Kaliumhypochlorit, Natriumpermanganat, Kaliumpermanganat, Karbamidperoxid, Wasserstoffperoxid, Kaliumkarbonat, Natriumkarbonat, Kalziumkarbonat und Magnesiumkarbonat.

6. Verfahren nach Anspruch 5, bei dem die oxidierende Lösung ausgewählt ist aus einer Lösung von Wasserstoffperoxid mit 15 Volumen-Prozent, einer Lösung von Natriumkarbonat mit der Konzentration 1 M und einer Lösung von Salpetersäure mit 65 Volumen-Prozent.

7. Verfahren nach einem der Ansprüche 1 bis 6, bei dem die chemische Ätzbehandlung ferner die Anwendung von Ultraschallwellen auf die Lösung, die ein Oxidationsmittel enthält, im Verlauf des Inkontaktbringens der Fasern mit der Lösung umfasst.

8. Verfahren nach einem der Ansprüche 1 bis 7, ferner umfassend ein Entschmälzen der Siliziumkarbidfasern vor der chemischen Ätzbehandlung.

9. Verfahren nach einem der Ansprüche 1 bis 8, bei dem die Siliziumkarbidfasern Fasern sind, die durch thermische Zersetzung und Sintern eines Präkursors Si-Al-C-O erhalten werden.

10. Verfahren zur Herstellung eines Werkstücks aus Verbundmaterial, umfassend eine Faservorform auf Basis von Siliziumkarbidfasern und eine Keramikmatrix, welches Verfahren die Realisierung der Faservorform ausgehend von Siliziumkarbidfasern der 3. Generation und die Bildung der Keramikmatrix um die Fasern herum umfasst, und **dadurch gekennzeichnet ist, dass** es ferner die Verwendung eines Verfahrens nach einem der Ansprüche 1 bis 9 vor der Bildung der Keramikmatrix umfasst.

## Claims

1. Method for reducing the surface roughness of silicon carbide fibres, the fibres being third-generation fibres and being intended to form a fibrous preform of a ceramic-matrix composite, said method comprising a treatment of chemical attack on the surface of the fibres by putting said fibres in contact with a solution comprising an oxidising agent.

2. Method according to claim 1, wherein the silicon carbide fibres before and after the chemical-attack treatment comprise a carbon content that is greater at the periphery of the fibres than at the core of the fibres.

3. Method according to claim 1 or claim 2, wherein the silicon carbide fibres are put in contact with the solution by immersion of the fibres in the solution.

4. Method according to any of claims 1 to 3, wherein the oxidising agent is chosen among carbonates of an alkaline or alkaline-earth metal, peroxides, hypochlorites of an alkaline or alkaline-earth metal, oxidising acids and permanganates of an alkaline or alkaline-earth metal.

5. Method according to claim 4, wherein the oxidising agent is chosen among nitric acid, chloric acid, chromic acid, sulfuric acid, calcium hypochlorite, magnesium hypochlorite, sodium hypochlorite, potassium hypochlorite, sodium permanganate, potassium permanganate, carbamide peroxide, hydrogen peroxide, potassium carbonate, sodium carbonate, calcium carbonate and magnesium carbonate.

6. Method according to claim 5, wherein the oxidising solution is chosen among a 15% v/v hydrogen peroxide solution, a 1 M sodium carbonate solution, a 1 M sodium carbonate solution and a 65% v/v nitric acid solution.

7. Method according to any one of claims 1 to 6, wherein the chemical-attack treatment further comprises the application of ultrasound to the solution comprising oxidising agent while the fibres are being put in contact with the solution.

8. Method according to any one of claims 1 to 7, further comprising a de-oiling of the silicon carbide fibres before the chemical-attack treatment.

9. Method according to any one of claims 1 to 8, wherein the silicon carbide fibres are fibres obtained by the thermal decomposition and sintering of an Si-Al-C-O precursor.

10. Method for manufacturing a piece made from composite material comprising a fibrous preform based on silicon carbide fibres and a ceramic matrix, said method comprising the production of the fibrous preform from third-generation silicon carbide fibres and the formation of the ceramic matrix around said fibres, and is **characterised in that** it further comprises the implementation of a method according to any one of claims 1 to 9 before the formation of the ceramic matrix.
